# EUROPÄISCHE PATENTSCHRIFT

(11) **EP 2 602 512 B1**
(45) Veröffentlichungstag und Bekanntmachung des Hinweises auf die Patenterteilung: **31.08.2016**
(21) Anmeldenummer: 12187567.8
(22) Anmeldetag: 08.10.2012
(51) Int. Cl.: F16H 25/22

(54) **Planetenwälzgewindetrieb**
Planetary rolled thread drive
Vis de réglage de laminoir planétaire

(30) Priorität: 05.12.2011 DE 102011087712
(43) Veröffentlichungstag der Anmeldung: 12.06.2013
(73) Patentinhaber: Schaeffler Technologies AG & Co. KG, 91074 Herzogenaurach (DE)
(72) Erfinder: Rudy, Dietmar, 66501 Kleinbundenbach (DE)

(56) Entgegenhaltungen:
- EP-A1- 0 168 942
- EP-A2- 1 961 995
- US-A1- 2005 160 856

## Beschreibung

Die vorliegende Erfindung betrifft einen Planetenwälzgewindetrieb, der eine Relativdrehung zwischen Spindelmutter und Gewindespindel in eine translatorische Relativverschiebung zwischen Spindelmutter und Gewindespindel umwandelt.

Aus DE 102009040606 A1 war ein Planetenwälzgewindetrieb bekannt, der mit einer Vielzahl von über den Umfang verteilt angeordneten Planeten versehen ist, die in Wälzeingriff mit der Gewindespindel sowie der Spindelmutter stehen, wobei die Gewindespindel eine Vielzahl von schraubenförmig um die Spindelachse gewundene Windungen wenigstens einer Gewinderille aufweist. Die Spindelmutter ist an ihrem Innenumfang mit einem mutterseitigen Profil versehen, wobei das planetenseitige Profil der Planeten in Wälzeingriff mit dem mutterseitigen Profil steht. Das planetenseitige Profil ist durch ringförmig geschlossenen Rillen gebildet, die quer zur Planetenachse angeordnet sind. Die Planeten laufen auf Planetenbahnen, die quer zur Spindelachse angeordnet sind.

Bei Planetenwälzgewindetrieben wird das Übersetzungsverhältnis zwischen Spindelmutter und Gewindespindel bestimmt durch die Steigung der Gewinderille an der Gewindespindel, ferner durch die Wälzkreisdurchmesser der Gewindespindel und der Spindelmutter, und ferner durch die Wälzkreisdurchmesser des Planeten, wobei oftmals abgestufte Planeten mit zwei unterschiedlichen Wälzdurchmessern eingesetzt werden, ein größerer Wälzdurchmesser für den Wälzeingriff mit der Gewindespindel sowie ein kleinerer Wälzdurchmesser für den Wälzeingriff mit der Spindelmutter. Im Fall von abgestuften Planeten steht bezogen auf die Länge der Planeten etwa eine halbe Länge des Planeten in Wälzeingriff mit der Spindelmutter und die andere halbe Länge in Wälzeingriff mit der Gewindespindel.

Wenn Planetenwälzgewindetriebe mit hohen Tragzahlen und großen Spindeldurchmessern zum Einsatz kommen, können tragende Längen an der Gewindespindel und an der Spindelmutter von beispielsweise 100 mm bis 150 mm erforderlich sein, so dass im Fall von abgestuften Planeten Längen von bis zu 300 mm benötigt werden. Derartige Planetenwälzgewindetriebe sind teuer in ihrer Herstellung.

Aus EP1961995 A2 war ein Planetenwälzgewindetrieb bekannt, dessen Planeten jeweils aus zwei einander benachbart angeordneten Teilplaneten sowie einer Welle gebildet sind. Beide Teilplaneten weisen koaxiale Durchgangsbohrungen auf, die von der gemeinsamen Welle durchsetzt sind. An ihren voneinanader abgewandten Enden ist die Welle in Distanzringen gelagert.

Ein Planetenwälzgewindetrieb mit den Merkmalen des Oberbegriffs des Anspruchs 1 war außerdem aus US 2005/0160856 A1 bekannt.

Aufgabe der Erfindung war es einen Planetenwälzgewindetrieb gemäß dem Oberbegriff des Anspruchs 1 anzugeben, der für hohe Tragzahlen geeignet und kostengünstig herstellbar ist.

Erfindungsgemäß wurde diese Aufgabe durch den Planetenwälzgewindetrieb gemäß Anspruch 1 gelöst.

Dadurch, dass die Planeten jeweils in mehrere axial hintereinander angeordnete Teilplaneten unterteilt sind, ergeben sich insbesondere bei Planetenwälzgewindetrieben mit großen Tragzahlen deutliche Kostenvorteile bei der Fertigung. Die erforderliche tragende Länge kann durch mehrere axial hintereinander angeordnete Teilplaneten bereitgestellt werden. Die Teilplaneten sind einzelne Bauteile.

Erfindungsgemäß ist ferner vorgesehen, dass zwischen axial einander benachbart angeordneten Teilplaneten (4) ein drehbeweglich in der Spindelmutter angeordneter gemeinsamer Synchronring mit Lagersitzen für die axial einander benachbart angeordneten Teilplaneten vorgesehen ist. Auf diese Weise ist sichergestellt, dass die Teilplaneten während ihres Umlaufs um die Planetenbahn koaxial angeordnet bleiben.

Je länger die Planeten bauen, desto mehr Rillen weisen die Planeten auf, und desto genauer muss die Teilung der Rillen sein, damit der Wälzeingriff mit der Spindelmutter und mit der Gewindespindel einwandfrei gewährleistet ist. Je genauer die Teilung ist, desto größer wird der Fertigungsaufwand, unter dem die Planeten hergestellt werden können. Durch die erfindungsgemäße Aufteilung der Planeten in Teilplaneten kann die Anforderung an die Teilungsgenauigkeit der an den Planeten ausgebildeten Rillen deutlich reduziert werden. Teilungsungenauigkeiten sind auf den kurzen Längen der Teilplaneten unwesentlich. Der erfindungsgemäße Planetenwälzgewindetrieb ermöglicht Fertigungstechnologien, mit denen die Planeten spanlos in einem Umformprozess mit den planetenseitigen Profilen versehen werden können. Auf diese Weise lassen sich die Planeten kostengünstig herstellen. Erfindungsgemäße Planetenwälzgewindetriebe können für hohe Tragzahlen bereit gestellt werden, wobei ein Verhältnis von Durchmesser zu Länge der Planeten kleiner als 0,1 bereitgestellt werden kann. Es können also im Verhältnis zum Durchmesser sehr schlanke Planeten bereit gestellt werden.

In vorteilhafter Weise ist zwischen axial einander benachbart angeordneten Teilplaneten ein axialer Abstand vorgesehen, so dass Teilungsungenauigkeiten dadurch ausgeglichen werden, dass der Abstand zwischen den freien Enden als Pufferraum dient, den die Teilplaneten einnehmen können, ohne den axial benachbarten Teilplaneten zu berühren.

Bei abgestuften Planeten ist jeder Teilplanet mit einem größeren Wälzdurchmesser für den Wälzeingriff mit der Gewindespindel und mit einem kleineren Wälzdurchmesser für den Wälzeingriff mit der Spindelmutter versehen. Auf diese Weise können die Teilplaneten einfach koaxial angeordnet werden.

Jeder Planet ist aus zwei oder weiteren Teilplaneten gebildet, die koaxial zueinander angeordnet sind.

In bekannter Weise können die Planeten in Distanzringen gelagert sein, die die über den Umfang verteilt angeordneten Planeten halten. Diese Distanzringe wälzen gemeinsam mit den Planeten um. Die Distanzringe weisen Lagersitze jeweils für einen Planeten auf, wobei die Lagersitze die Verteilung der Planeten über den Umfang bestimmen. Die Distanzringe sind in der Spindelmutter drehbar angeordnet.

Zu beiden axialen Enden der Planeten kann je ein Distanzring angeordnet sein. Bei dem erfindungsgemäßen Planetenwälzgewindetrieb werden die beiden axial äußeren Teilplaneten des Planeten an den äußeren Enden jeweils mit einem Distanzring gelagert.

Um zu gewährleisten, dass die Teilplaneten koaxial während eines Umlaufs um die Planetenbahn angeordnet bleiben, ist erfindungsgemäß zwischen zwei einander benachbart angeordneten Teilplaneten jeweils ein drehbeweglich in der Spindelmutter angeordneter Synchronring mit Lagersitzen für die beiden einander benachbarten Teilplaneten vorgesehen. So ist ein gemeinsamer Synchronring für zwei einander benachbart angeordnete Teilplaneten vorgesehen.

In vorteilhafter Weise kann ein gemeinsamer Lagersitz für die beiden einander benachbarten Teilplaneten vorgesehen sein. Die Lagersitze können sternförmig um die Spindelachse herum angeordnet und etwa u-förmig ausgebildet und nach radial außen geöffnet sein. Die Lagersitze können auch durch Löcher oder Bohrungen gebildet sein, die in eine als Synchronring verwendete Scheibe eingebracht sind. Die Teilplaneten teilen sich den Lagersitz. Erfindungsgemäße Synchronringe können Kräfte übertragen, die über die Teilplaneten eingeleitet werden. Die Lagersitze der Synchronringe sind entsprechend stabil ausgeführt, um eine einwandfreie Synchronisation zu gewährleisten. Derartige Synchronringe können dicker als die Distanzringe sein.

Wenn der Planet aus zwei Teilplaneten gebildet ist, können insgesamt zwei Distanzringe und ein Synchronring vorgesehen werden. Je ein Distanzring an einem axialen Ende des Planeten und ein Synchronring zwischen den beiden Teilplaneten. Wenn weitere Teilplaneten gewünscht sind, können zwischen den jeweiligen Teilplaneten weitere Synchronringe in der beschriebenen Weise vorgesehen werden.

Endseitig einander zugewandte Zapfen der Teilplaneten können in dem gemeinsamen Lagersitz gelagert sein, wobei der Lagersitz eine axiale Erstreckung aufweist, die größer ist als die Summe der axialen Eintauchtiefe der beiden Zapfen in den Lagersitz. Auf diese Weise ist sichergestellt, dass zwischen den Zapfenenden ein Abstand eingestellt ist, so dass Toleranzungenauigkeiten der Teilplaneten ausgeglichen werden können. Die Zapfen können im Lagersitz mit ihrer Mantelfläche in bekannter Weise zugleich eine Gleitfläche bilden, die mit einer Gleitfläche des Synchronrings ein Gleitlager bildet, so dass ein reibungsarmes Rotieren der Planeten in ihren Lagersitzen gewährleistet ist.

Die Spindelmutter kann durch mehrere axial hintereinander angeordnete Teilmuttern gebildet sein. Diese Teilmuttern können fest miteinander verbunden sein, wobei stoffschlüssige, reibschlüssige, formschlüssige sowie Klebeverbindungen denkbar sind. Die Verbindung kann unmittelbar zwischen den Teilmuttern vorgesehen sein. Es ist aber denkbar, die Teilmuttern in einem gemeinsamen Gehäuse unterzubringen, wobei in diesem Fall die feste Verbindung über das Gehäuse hergestellt werden kann.

Einander benachbart angeordnete Teilmuttern können an ihren einander zugewandten Stirnseiten jeweils mit einer Aufnahme für den gemeinsamen Synchronring versehen sein. Nach dem Einsetzen des Synchronrings können die beiden Teilmuttern zusammengefügt werden. Auf diese Weise kann ein mittlerer Synchronring einfach in die Spindelmutter eingebaut werden. Die beiden Aufnahmen können gemeinsam einen Gleitlagersitz für den gemeinsamen Synchronring bilden.

Die Synchronringe können an ihrem Außenumfang in der Spindelmutter radial geführt werden und an ihrem Außenumfang mit einer Gleitfläche versehen sein. Die radiale Führung sorgt für eine einwandfreie koaxiale Anordnung des Synchronrings zur Spindelachse, und somit für eine einwandfreie Führung der Planeten.

Distanzringe können aus Kunststoff gebildet sein. Ein für zwei Teilplaneten vorgesehener gemeinsamer Synchronring kann aus Bronze hergestellt sein; derartige Synchronringe gewährleisten einerseits eine stabile Anordnung der Teilplaneten und somit ein einwandfreies synchrones Umlaufen der Teilplaneten, andererseits bilden sie einen guten Gleitwerkstoff um sowohl am Außenumfang als auch in den Lagersitzen für die Teilplaneten Gleitlagerflächen zu bilden. Synchronringe werden stärker belastet als einfache Distanzringe.

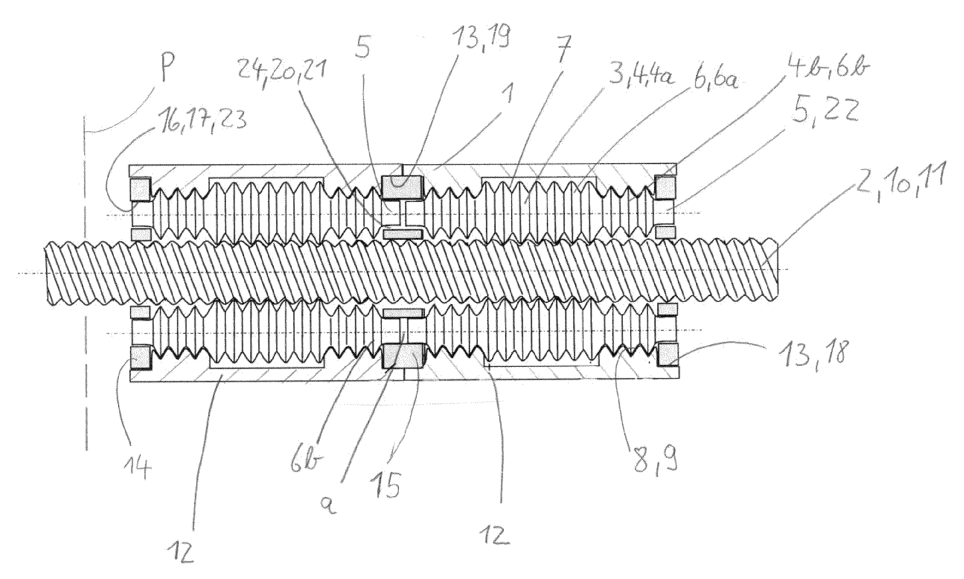

Nachstehend wird die Erfindung anhand eines in einer einzigen Figur abgebildeten Ausführungsbeispieles näher erläutert.

Die einzige Figur zeigt einen erfindungsgemäßen Planetenwälzgewindetrieb im Längsschnitt. Eine Spindelmutter 1 ist auf einer Gewindespindel 2 angeordnet. Die Spindelmutter 1 oder die Gewindespindel 2 kann über einen nicht abgebildeten motorischen Antrieb angetrieben und in Rotation versetzt werden.

Eine Vielzahl von über den Umfang der Gewindespindel 2 verteilt angeordneten Planeten 3 sind in Wälzeingriff mit der Gewindespindel 2 und der Spindelmutter 1. Die Planeten 3 laufen auf quer zur Spindelachse angeordneten Planetenbahnen P um die Spindelachse der Gewindespindel 2. Sie rotieren um ihre Planetenachse und rotieren gegenüber der Gewindespindel 2 sowie der Spindelmutter 1, wobei die Planeten 3 am Innenumfang der Spindelmutter 1 sowie am Außenumfang der Gewindespindel 2 abwälzen.

Die Planeten 3 sind jeweils aus zwei Teilplaneten 4 gebildet, die koaxial und axial hintereinander angeordnet sind. Die Teilplaneten 4 sind baugleich ausgeführt. Der Teilplanet 4 weist einen radial vergrößerten Mittelabschnitt 4a und zwei radial verjüngte Endabschnitte 4b.Der Teilplanet 4 ist an seinen axialen Enden mit je einem Zapfen 5 versehen.

In bekannter Weise sind die Teilplaneten 4 mit einem planetenseitigen Profil 6 versehen, das mit der Gewindespindel 2 sowie der Spindelmutter 1 kämmt. Das planetenseitige Profil 6 weist einen mittleren Profilabschnitt 6a auf, der am Außenumfang des Mittelabschnitts 4a angeformt ist. Der Profilabschnitt 6a kämmt mit der Gewindespindel 2. Die beiden Endabschnitte 4b sind an ihrem Außenumfang jeweils mit einem äußeren Profilabschnitt 6b versehen, der mit der Spindelmutter 1 kämmt. Die Profilabschnitte 6a, 6b sind durch ringförmig geschlossene, parallel zueinander angeordnete Rillen 7 gebildet, die parallel zur Planetenbahn P angeordnet sind.

Die Spindelmutter 1 ist an ihrem Innenumfang an beiden axialen Enden jeweils mit einem mutterseitigen Profil 8 versehen, das mit den planetenseitigen äußeren Profilabschnitten 6b kämmt. Das mutterseitige Profil 8 ist durch ringförmig geschlossene, parallel zueinander angeordnete Rillen 9 gebildet, die parallel zu der Planetenbahn P angeordnet sind.

Die Gewindespindel 2 ist an ihrem Außenumfang mit einer Gewinderille 10 versehen, die aus einer Vielzahl von um die Spindelachse schraubenförmig gewundenen Windungen 11 gebildet ist.

Die Spindelmutter 1 ist aus zwei Teilmuttern 12 zusammengesetzt, die unbeweglich zueinander angeordnet sind. Beide Teilmuttern 12 sind jeweils mit dem mutterseitigen Profil 8 versehen. Die Teilmuttern 12 sind baugleich ausgeführt. Die Teilmutter 12 ist an beiden axialen Enden mit je einer ringförmigen Ausnehmung 13 versehen, die durch einen umlaufenden radialen Absatz gebildet ist.

Die Planeten 3 sind in an sich bekannten Distanzringen 14 und einem erfindungsgemäßen Synchronring 15 gelagert und gleichmäßig über den Umfang der Gewindespindel 2 verteilt. Die Planeten 3 sind mit ihren an den voneinander abgewandten Enden angeformten Zapfen 5 in Löchern 16 der Distanzringe 14 drehbar gelagert. Die aus einem Gleitlagerwerkstoff gebildeten Distanzringe 14 sind durch Scheiben gebildet, deren Stirnflächen mit den über den Umfang verteilt angeordneten axial durchgehenden Löchern 16 versehen sind. Diese Löcher 16 bilden Lagersitze 17 für die Planeten 3. Die Distanzringe 14 sind in den ringförmigen Ausnehmungen 13 der Teilmuttern 12 angeordnet, wobei die Ausnehmungen 13 Gleitlagersitze 18 für die Distanzringe 14 bilden. Die Distanzringe 14 sind in den Gleitlagersitzen 18 radial und axial geführt.

Der Synchronring 15 ist in den beiden ringförmigen Ausnehmungen 13 der beiden Teilmuttern 12 eingesetzt. Die beiden Ausnehmungen 13 bilden gemeinsam einen Gleitlagersitz 19 für den Synchronring 15, wobei der Synchronring 15 axial und radial in dem Gleitlagersitz 19 geführt und drehbar gelagert ist. Der Synchronring 15 ist aus einer Scheibe gebildet und an seinen beiden Stirnseiten mit über den Umfang verteilt angeordneten Durchgangslöchern 20 versehen, die gemeinsame Lagersitze 21 für die Teilplaneten 4 bilden. Die beiden Teilplaneten 4 jedes Planeten 3 greifen mit ihren einander zugewandten Zapfen 5 in das gemeinsame Durchgangsloch 20 und teilen sich den gemeinsamen Lagersitz 21. Die Teilplaneten 4 sind in den Lagersitzen 17, 21 des Distanzringes 14 und des Synchronringes 15 drehbar gelagert.

Der Figur ist zu entnehmen, dass der Lagersitz 21 des Synchronrings 15 eine axiale Erstreckung aufweist, die größer ist als die Summe der axialen Eintauchtiefe der beiden Zapfen 5 in den Lagersitz 21. Auf diese Weise ist sichergestellt, dass zwischen den Zapfenenden der beiden Zapfen 5 ein Abstand a eingestellt ist, so dass Toleranzungenauigkeiten der Teilplaneten 4 ausgeglichen werden können. Teilplaneten 4 können daher in dem Synchronring 15 "atmen". Es ist zweckmäßig, wenn zwischen dem Beginn des äußeren planetenseitigen Profilabschnitts 6b und dem Synchronring 15 etwas Abstand vorgesehen ist, so dass keine axialen Kräfte zwischen Teilplanet 4 und Synchronring 15 übertragen werden.

Der im Synchronring 15 durch den Abstand a ausgebildete Zwischenraum zwischen den Teilplaneten 4 kann mit Schmierstoff gefüllt werden.

Die Zapfen 5 bilden mit ihren Mantelflächen zugleich Gleitflächen 22, die mit durch die Wandungen der Löcher 16 und der Durchgangslöcher 20 gebildeten Gleitflächen 23, 24 des Distanzringes 15 und des Synchronringes 15 Gleitlager bilden, so dass ein reibungsarmes Rotieren der Planeten 3 in ihren Lagersitzen 17, 21 gewährleistet ist.

Die Spindelmutter kann alternativ einstückig ausgeführt sein; in diesem Fall kann der mittlere Synchronring geteilt sein, mit einer in der Spindelachse liegenden Teilungsebene. Es können Planeten vorgesehen werden, die mehr als zwei Teilplaneten aufweisen, die jedoch in der beschriebenen Weise zueinander angeordnet und in Synchronringen gelagert sind.

### Bezugszeichenliste

- 1: Spindelmutter
- 2: Gewindespindel
- 3: Planet
- 4: Teilplanet
- 4a: Mittelabschnitt
- 4b: Endabschnitt
- 5: Zapfen
- 6: planetenseitiges Profil
- 6a: Profilabschnitt
- 6b: Profilabschnitt
- 7: Rille
- 8: mutterseitiges Profil
- 9: Rille
- 10: Gewinderille
- 11: Windung
- 12: Teilmutter
- 13: ringförmige Ausnehmung
- 14: Distanzring
- 15: Synchronring
- 16: Loch
- 17: Lagersitz
- 18: Gleitlagersitz
- 19: Gleitlagersitz
- 20: Durchgangsloch
- 21: Lagersitz
- 22: Gleitfläche
- 23: Gleitfläche
- 24: Gleitfläche

## Patentansprüche

1. Planetenwälzgewindetrieb, mit einer auf einer Gewindespindel (2) angeordneten Spindelmutter (1), und mit über den Umfang verteilt angeordneten Planeten (3), die in Wälzeingriff mit der Spindelmutter (1) und der Gewindespindel (2) stehen, wobei die Planeten (3) auf einer Planetenbahn (P) umlaufen, die quer zu der Spindelachse angeordnet ist, , und wobei die Planeten (3) jeweils in mehrere axial hintereinander angeordnete Teilplaneten (4) unterteilt sind **dadurch gekennzeichnet, dass** zwischen axial einander benachbart angeordneten Teilplaneten (4) ein drehbeweglich in der Spindelmutter (1) angeordneter gemeinsamer Synchronring (15) mit Lagersitzen (21) für die axial einander benachbart angeordneten Teilplaneten (4) vorgesehen ist.

2. Planetenwälzgewindetrieb nach Anspruch 1, bei dem zwischen axial einander benachbart angeordneten Teilplaneten (4) ein axialer Abstand (a) vorgesehen ist.

3. Planetenwälzgewindetrieb nach Anspruch 1, bei dem drehbeweglich in der Spindelmutter (1) angeordnete Distanzringe (14) mit Lagersitzen (17) für jeweils einen Planeten (3) vorgesehen sind.

4. Planetenwälzgewindetrieb nach Anspruch 3, bei dem zu beiden axialen Seiten der Planeten (3) je ein Distanzring (14) angeordnet ist, wobei die beiden axial äußeren Teilplaneten (4) des Planeten (3) jeweils in einem der beiden Distanzringe (14) gelagert sind.

5. Planetenwälzgewindetrieb nach Anspruch 1, bei dem endseitig einander zugewandte Zapfen (5) der Teilplaneten (4) in einem gemeinsamen Lagersitz (21) des Synchronrings (15) gelagert sind, wobei der Lagersitz (21) eine axiale Erstreckung aufweist, die größer ist als die Summe der axialen Eintauchtiefe der beiden Zapfen (5) in den Lagersitz (21).

6. Planetenwälzgewindetrieb nach Anspruch 1, bei dem die Spindelmutter (1) durch mehrere axial hintereinander angeordnete Teilmuttern (12) gebildet ist.

7. Planetenwälzgewindetrieb nach den Ansprüchen 1 und 6, bei dem einander benachbart angeordnete Teilmuttern (12) an ihren einander zugewandten Stirnseiten jeweils mit einer Aufnahme für den gemeinsamen Synchronring (15) versehen sind.

8. Planetenwälzgewindetrieb nach Anspruch 7, bei dem die beiden Aufnahmen gemeinsam einen Gleitlagersitz (19) für den gemeinsamen Synchronring (15) bilden.

9. Planetenwälzgewindetrieb nach Anspruch 3, bei dem der Synchronring (15) aus einem Gleitlagerwerkstoff, insbesondere Bronze, gebildet ist.

## Claims

1. Planetary roller screw drive, having a spindle nut (1) which is arranged on a threaded spindle (2), and having planets (3) which are arranged distributed over the circumference and are in rolling engagement with the spindle nut (1) and the threaded spindle (2), the planets (3) circulating on a planetary track (P) which is arranged transversely with respect to the spindle axis, and the planets (3) being divided in each case into a plurality of part planets (4) which are arranged axially one behind another, **characterized in that** a common synchronizer ring (15) which is arranged in the spindle nut (1) in a rotationally movable manner with bearing seats (21) for part planets (4) which are arranged axially adjacently with respect to one another is provided between the part planets (4) which are arranged axially adjacently with respect to one another.

2. Planetary roller screw drive according to Claim 1, in which an axial spacing (a) is provided between part planets (4) which are arranged axially adjacently with respect to one another.

3. Planetary roller screw drive according to Claim 1, in which spacer rings (14) which are arranged in the spindle nut (1) in a rotationally movable manner with bearing seats (17) for in each case one planet (3) are provided.

4. Planetary roller screw drive according to Claim 3, in which in each case one spacer ring (14) is arranged on both axial sides of the planets (3), the two axially outer part planets (4) of the planet (3) being mounted in each case in one of the two spacer rings (14).

5. Planetary roller screw drive according to Claim 1, in which journals (5) which face one another on the end side of the part planets (4) are mounted in a common bearing seat (21) of the synchronizer ring (15), the bearing seat (21) having an axial extent which is greater than the sum of the axial insertion depth of the two journals (5) into the bearing seat (21).

6. Planetary roller screw drive according to Claim 1, in which the spindle nut (1) is formed by way of a plurality of part nuts (12) which are arranged axially behind one another.

7. Planetary roller screw drive according to Claims 1 and 6, in which part nuts (12) which are arranged adjacently with respect to one another are provided on their mutually facing end sides in each case with a receptacle for the common synchronizer ring (15).

8. Planetary roller screw drive according to Claim 7, in which the two receptacles together form a sliding bearing seat (19) for the common synchronizer ring (15).

9. Planetary roller screw drive according to Claim 3, in which the synchronizer ring (15) is formed from a sliding bearing material, in particular bronze.

## Revendications

1. Vis de réglage de laminoir planétaire, comprenant un écrou de broche (1) disposé sur une broche filetée (2) et des satellites (3) répartis sur la périphérie, qui sont en engagement de roulement avec l'écrou de broche (1) et la broche filetée (2), les satellites (3) tournant sur une piste planétaire (P) qui est disposée transversalement à l'axe de la broche, et les satellites (3) étant à chaque fois divisés en plusieurs satellites partiels (4) disposés axialement les uns derrière les autres, **caractérisée en ce qu'**entre des satellites partiels (4) disposés axialement de manière adjacente les uns aux autres, une bague de synchronisation commune (15) disposée de manière déplaçable en rotation dans l'écrou de broche (1) est pourvue de sièges de palier (21) pour les satellites partiels (4) disposés axialement de manière adjacente les uns aux autres.

2. Vis de réglage de laminoir planétaire selon la revendication 1, dans laquelle une distance axiale (a) est prévue entre des satellites partiels (4) disposés axialement de manière adjacente les uns aux autres.

3. Vis de réglage de laminoir planétaire selon la revendication 1, dans laquelle des bagues d'espacement (14) disposées de manière déplaçable en rotation dans l'écrou de broche (1) sont pourvues de sièges de palier (17) pour un satellite respectif (3).

4. Vis de réglage de laminoir planétaire selon la revendication 3, dans laquelle une bague d'espacement respective (14) est disposée des deux côtés axiaux des satellites (3), les deux satellites partiels axialement extérieurs (4) du satellite (3) étant à chaque fois supportés dans l'une des deux bagues d'espacement (14).

5. Vis de réglage de laminoir planétaire selon la revendication 1, dans laquelle des tourillons (5) des satellites partiels (4) tournés l'un vers l'autre du côté de l'extrémité sont supportés dans un siège de palier commun (21) de la bague de synchronisation (15), le siège de palier (21) présentant une étendue axiale qui est supérieure à la somme de la profondeur d'enfoncement axiale des deux tourillons (5) dans le siège de palier (21).

6. Vis de réglage de laminoir planétaire selon la revendication 1, dans laquelle l'écrou de broche (1) est formé par plusieurs écrous partiels (12) disposés axialement les uns derrière les autres.

7. Vis de réglage de laminoir planétaire selon les revendications 1 et 6, dans laquelle des écrous partiels (12) disposés de manière adjacente les uns aux autres sont pourvus au niveau de leurs côtés frontaux tournés l'un vers l'autre à chaque fois d'un logement pour la bague de synchronisation commune (15).

8. Vis de réglage de laminoir planétaire selon la revendication 7, dans laquelle les deux logements forment ensemble un siège de palier lisse (19) pour la bague de synchronisation commune (15).

9. Vis de réglage de laminoir planétaire selon la revendication 3, dans laquelle la bague de synchronisation (15) est formée d'un matériau pour palier lisse, en particulier de bronze.
